# EUROPEAN PATENT SPECIFICATION

(11) **EP 3 840 986 B1**
(45) Date of publication and mention of the grant of the patent: **13.03.2024**
(21) Application number: 18919272.7
(22) Date of filing: 15.05.2018
(51) Int. Cl.: B60P 3/32, B60P 3/36, B62D 21/20, B62D 33/04, E04B 1/348, B62D 23/00, B62D 29/00

(54) **T-SLOT ALUMINUM CONSTRUCTION LIGHT WEIGHT CARAVAN**
LEICHTGEWICHTIGER WOHNWAGEN AUS T-NUT-ALUMINIUMSCHIENEN
CARAVANE LÉGÈRE, DE CONSTRUCTION EN ALUMINIUM À RAINURES EN T

(43) Date of publication of application: 30.06.2021
(73) Proprietor: SERIN, Murat, 59850 Corlu/Tekirda (TR)
(72) Inventor: SERIN, Murat, 59850 Corlu/Tekirda (TR)
(74) Representative: Yuce, Serfinaz Sibel
(86) International application number: PCT/TR2018/050231
(87) International publication number: WO 2019/221675

(56) References cited:
- CN-A- 106 627 330
- DE-U1-202018 000 114
- US-A- 4 542 933
- US-A1- 2007 007 794
- US-A1- 2011 000 146
- US-A1- 2013 175 828
- US-B1- 9 919 639

## Description

### Technical Area

Invention, is about a camper that can be used four seasons outdoors by it's target group; while supplying security and comfort for lodging; it can also be towed to the offroad by a motor vehicle, it is all terrain, it provides all essential needs in a practical way (bed, dining table, kitchen, WC, shower, fridge, heating), it is a lightweight and sturdy caravan.

### Prior Art

In recent years, nature orientation and natural sports are rising trends. Therefore, number of hunters, amateur coastal fishermen, campers, nature explorers, offroad enthusiasts, trekkers, paragliders, wind surfers, kite surfers and skiers and their requirements in professional equipment are also increased. In addition to those groups, there is a vast number of weekend and regular travellers who explore new places and new cities.

Those dynamic and active group of people's biggest problem is the accommodation at the travelled location. Because of the land conditions or high costs, accommodation facilities for nature tourism are inadequate in countryside. This factor is regarded as a direct handicap for free movement, and it limits the time spent in nature. Therefore, there is an incraeasing demand in satisfying basic accommodation requirements for nature lovers.

In the state of the art, large volumed conventional caravans that are suitable for summer conditions are widely produced and used. Their chassis consists of bended iron profile or iron box profile; frame structures are iron welded; galvanized coating method is used against corrosion and exterior is largely covered with fiberglass plates. Conventional caravans are very heavy because of their large volumes and iron frame stuctures. Heavy weight causes high fuel consumption of the towing vehicle, and difficulties in maneuvering in traffic. Therefore, those products are not convenient in frequent usage and require additional expertise for driving in the traffic.

Land use of this type of conventional caravans is much harder. Because they are close to the ground; long and flat tail section creates friction and obstruction on pits and bumps; it also creates maneuvering challenges on the rugged terrain.

For this reason, their widespread use is usually in the summer at long-term summer camps and on asphalt terrain. Because it is difficult to maneuver and park in the city, it is very typical that they are transported and abandoned to a spare place for all their physical life.

'Teardrop Caravans are an alternative class to conventional caravans, because they are lightweigt and easy to maneuver. Small mass and light weight increases the chance of land use of a caravan. But Teardrops are again only appropriate for summer or spring camps. They are made of iron chassis structure, heat isolation is not their priority, kitchen is located outside the trailer, they don't have indoor WC and/or bathroom, and they are small. Due to their limited living spaces, these products are mostly used just for sleeping.

Another state of the art alternative is portable tent systems that can be attached to the ceiling or sides of a SUV. This type of products are far from providing required comfort. They can't provide shower and toilet during long-term accommodation. It is very difficult to use them in winter conditions as they are not favorable for heat insulation.

An invention used in the state of the art is a utility model, entitled; "Modular Caravan Structuring for Lightweight Commercial Vehicles" and numbered TR2016/00928. The invention, which is applied to light-weight commercial vehicles is about the removal of the rear cargo section and installation of a caravan instead. Lightweight commercial vehicle's cargo section is disassembled and a caravan is mounted on the chassis and then all internal equipment is assembled.

Another conventional technique is entitled "Caravan with expandable living space" It is a utility model, numbered TR2015/12661. It is a 4 square-meter truck when completely closed; it has 16 square-meter footprint caravan when opened, and it is not much different from a normal caravan. It allows a wide space. Although folding feature of the caravan provides advantages such as small footprint fabric and canvas used in folding parts does not provide sufficient heat-sound-water insulation in extreme winter conditions.

Another caravan is known from US 4 542 933 A, which discloses a lightweight caravan made of aluminium. T

So far there has been no product manufactured or used as a caravan made of subject matter of the invention: "T-slot Aluminum Profile"

### Objective Of The Invention

The invention's structure is composed of high-strength aluminium material. It is developed for four seasons use in both normal road and off-road conditions. It is a lightweight and sturdy, practical offroad camping trailer that provides sufficient living space that can be varied and developed according to the needs of user groups.

An objective of the invention is remaining in the lowest weight class for towing caravans while providing adequate living space. Designing a 180 cm standing height, 180 cm wide bed section, and solving dining table- bed- kitchen- unit-shower- WC needs in the inner area at the same time is unique.

Another purpose of the invention is to provide comfort in extreme winter conditions with diesel fueled heating system and high-heat-water-sound insulation of the structure. In hot summer conditions, under the sun, by providing high protection and producing electrical power with solar panels, it consistently meets the lightening needs of users everywhere, even far from the cities.

Another objective of the invention is to provide secure and affordable accommodation in cities visited. Ready-to-use toilet/shower facility of your own is an advantage for sanitation, kitchen and fridge facility allows you to cook and eat your own meals in the caravan.

Another objective is that; it is also possible to create the ideal caravan for different user groups by adding inner equipment without any change in chassis and structure.

Another objective of the invention is to meet the needs of hunters. Invention will help hunters to access all terrains smoothly, in all conditions (summer & winter) and lodge there. It's camouflage coating (available in Hunter Type) is compatible with the nature and hunting apparels and equipments. The storage area in the front section of the trailer allows to carry the dogs and hunting supplies easily.

Another objective of the invention is for traveller couples, who love weekend trips or longer city excursions. It is a caravan that can be pulled easily and rapidly by any model of Class B vehicles. Aerodynamic design provides travel safety and considerable fuel economy.

Another objective of the invention is modification for non-land users who won't use the trailer for long journeys. Replacing all terrain tires with tires in smaller sizes will increase the security of the trip; and small volume enables to maneuver in heavy traffic and facilitates easy parking.

Another objective of the invention, is to provide a shelter and emergency life support after natural disasters such as earthquakes, landslides that may cause house damages. Anyone who needs a home can have a safe accommodation by the invention which can easily find a place in any parking lot. It is unaffected by external factors; it can adapt to any condition and always ready to use.

### Figures for the Description of The Invention

Drawings showing the developed invention are attached, as follows:

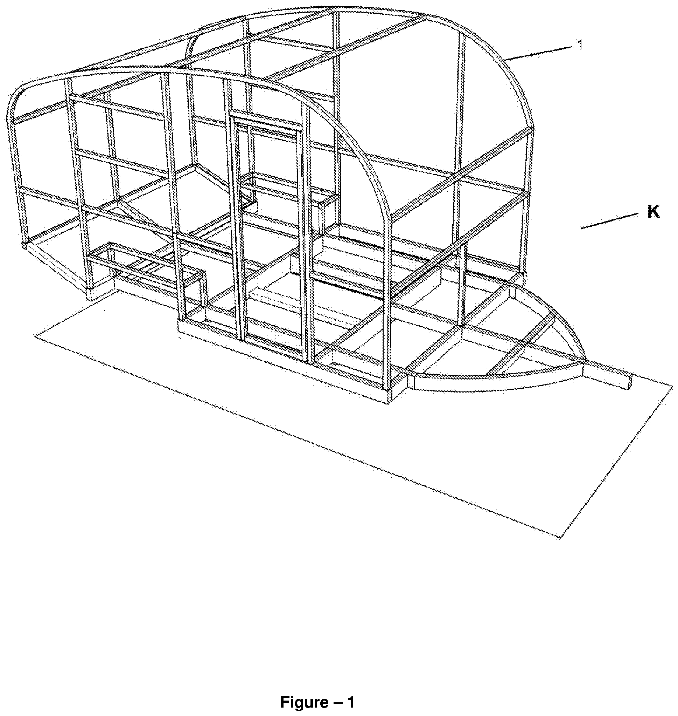

**Figure 1****.** Perspective View of the T-Slot Aluminum Profile Main Frame

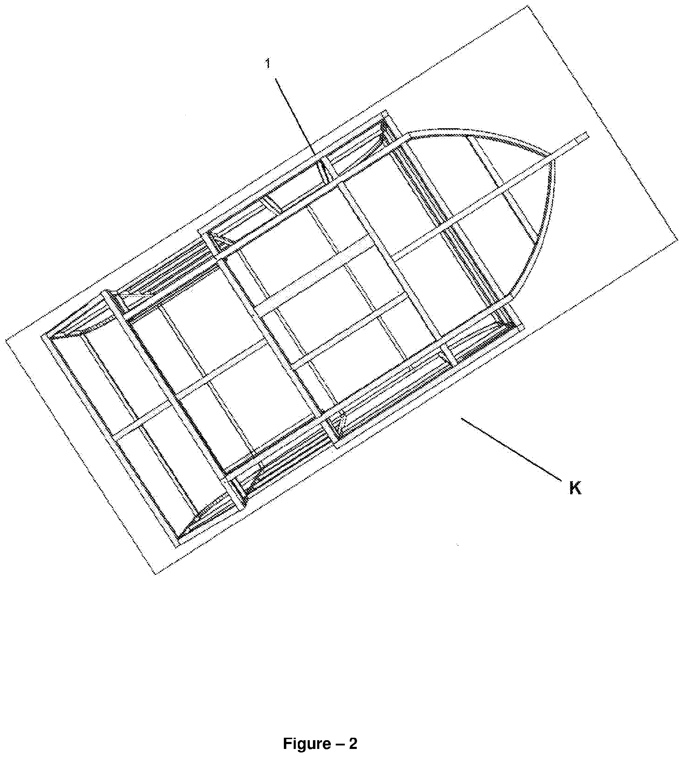

**Figure 2****.** Bottom View Of The T-Slot Aluminum Profile Main Frame

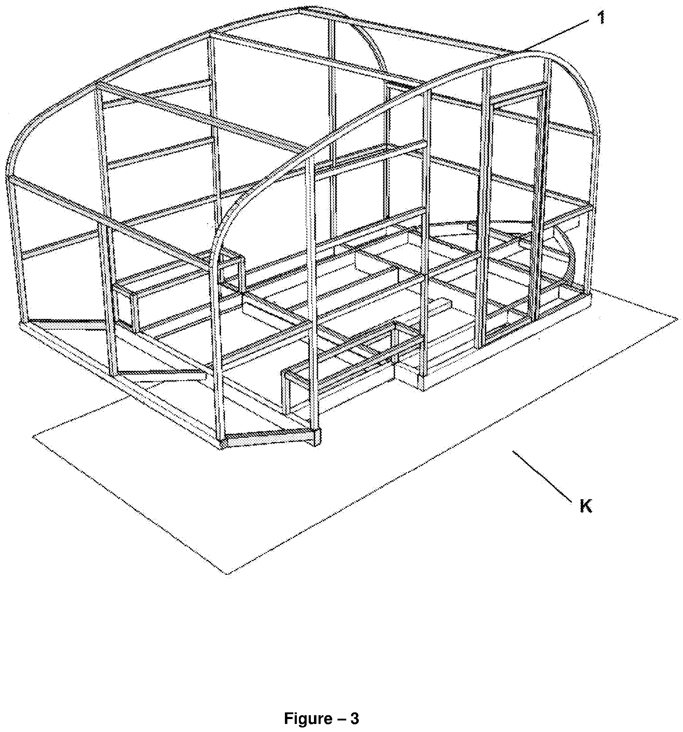

**Figure 3****.** The Left View Of The T-Slot Aluminum Profile Main Frame

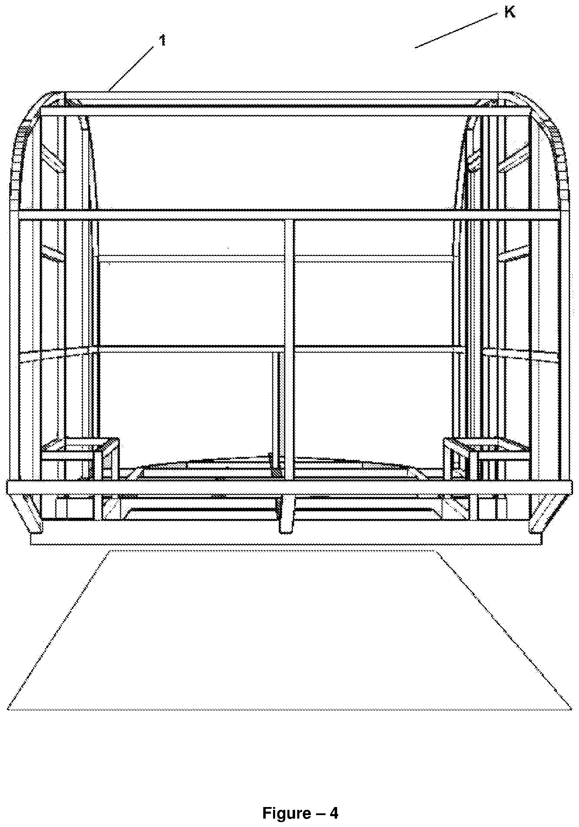

**Figure 4****.** The Rear View Of The T-Slot Aluminum Profile Main Frame

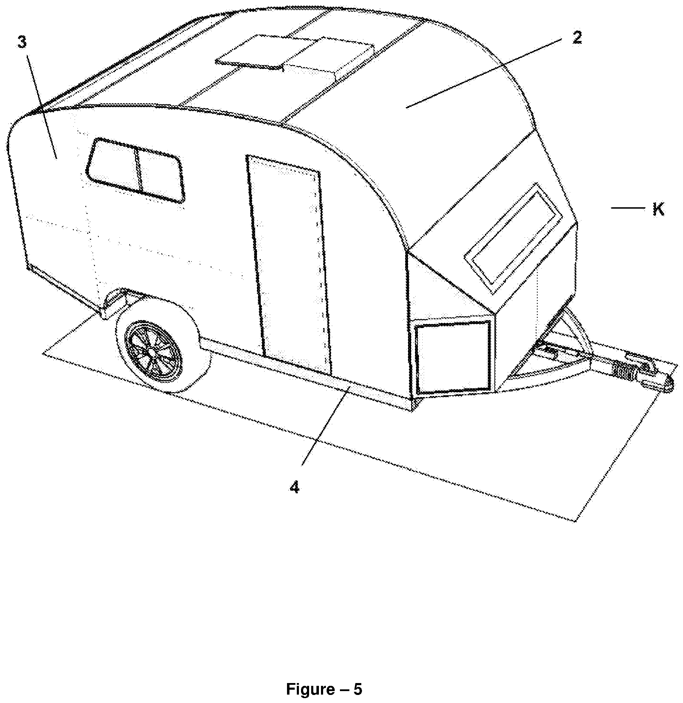

**Figure 5****.** Simulated Perspective View Of The Caravan

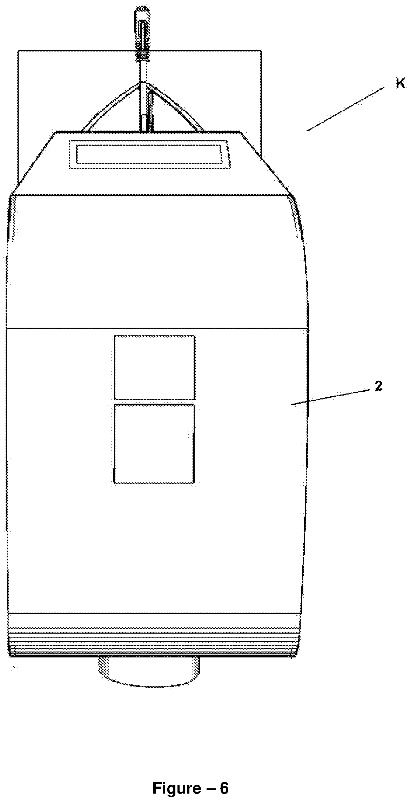

**Figure 6****.** Simulated Top View Of the Caravan

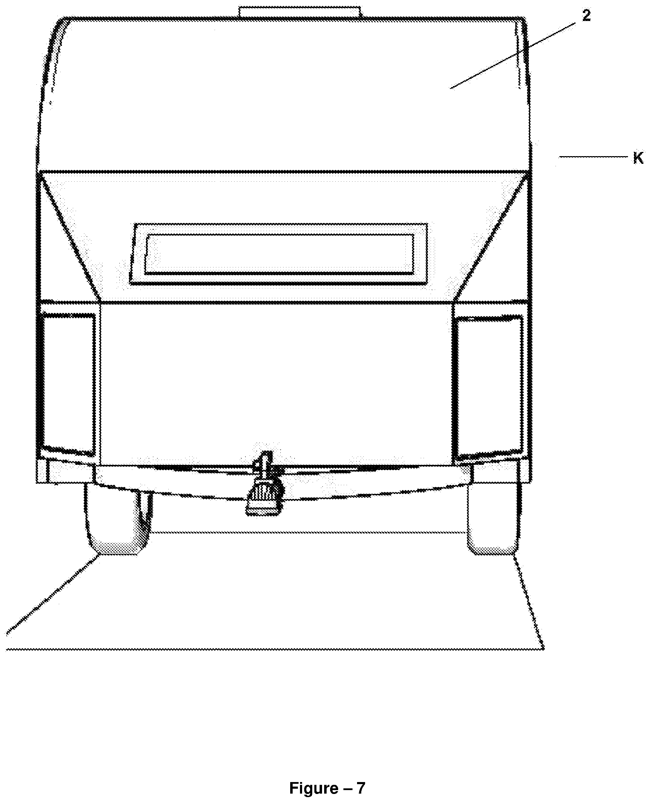

**Figure 7****.** Simulated Rear View Of The Caravan

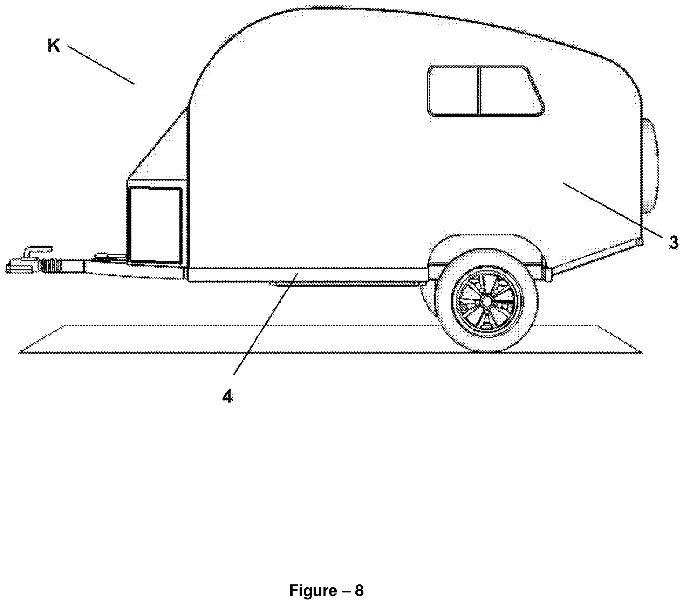

**Figure 8****.** Simulated Side View Of The Caravan

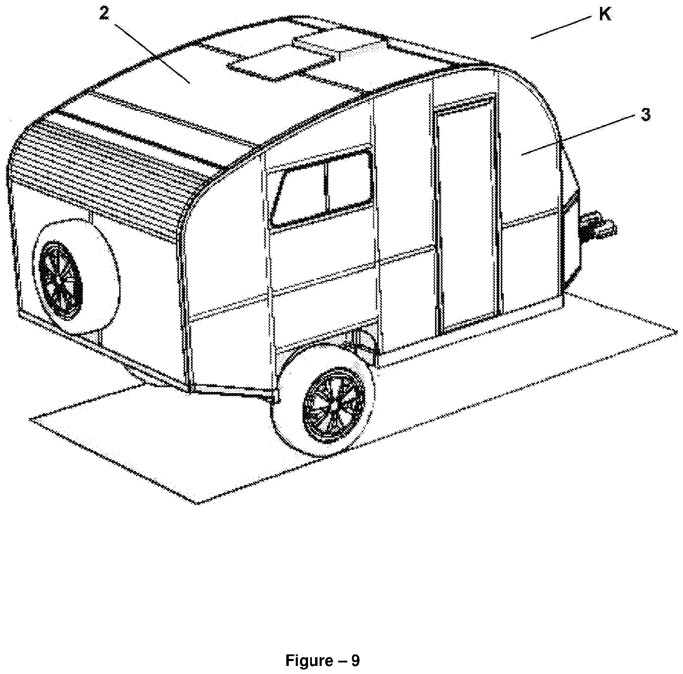

**Figure 9****.** Simulated Perspective View Of The Caravan

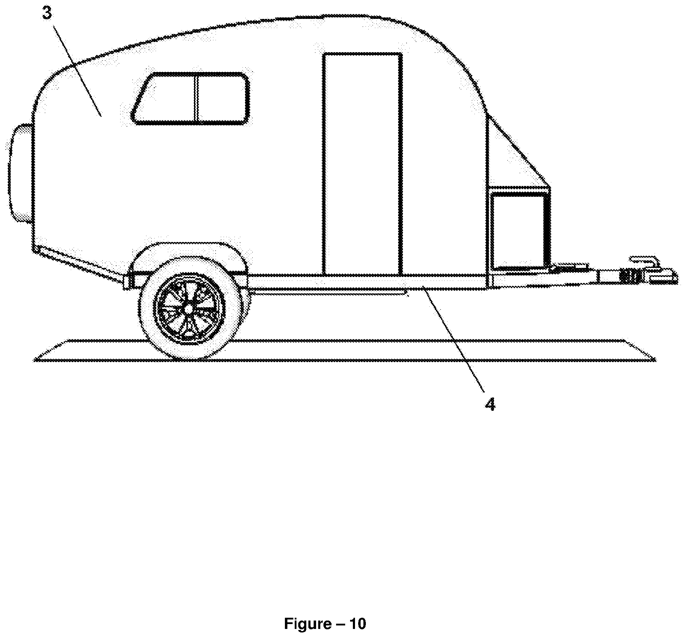

**Figure 10****.** Simulated Side View Of The Caravan

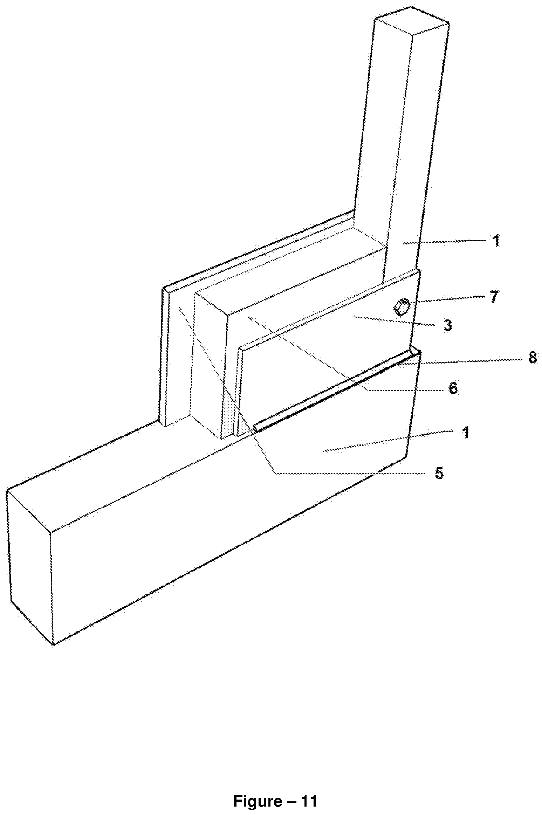

**Figure 11****.** Simulation Showing The Main Frame and The Panels Are Attached With The Screws and Acyrlic Double-Sided Adhesive Bandages

### Reference Numbers for the Description of The Invention

Parts/components are individually numbered and the corresponding numbers are given below:
**1-** T-Slot Aluminum Profile Connected with Screws
**2-** Aluminum Composite Bended Top Panel
**3-** Aluminum Composite Side Panels
**4-** Carrier (Main) Chassis
**5-** Plywood Interior Covering
**6-** insulation Layer
**7-** Screw Connection
**8-** Acyrlic Double-Sided Adhesive Bandages
**C-** Caravan

### Description of The Invention

In this detailed description, subject of the invention a light-weight caravan made from T-slot aluminum profile and it's structure is explained. That explanation should not cause any limitations, it is just to make the subject clear. Invention is a lightweight caravan made of T-Slot aluminum profile and one of it's embodiments consist of;

The main frame structure made of T-Slot Aluminum Profile and connected with screws (1) that provides light weight, high elasticity, easy montage, removal and attachment feature, strenght against fracture and impact; and the chassis (4) Concave and U-shaped Aluminum composite top panel (2) covers the frame structure (1), the front, roof and rear like a case; along with Aluminum Composite Side Panels (3) which cover sides. All aluminum panels and T-slot Aluminum Profiles are pasted to each other with Acyrlic Double-Sided Adhesive Bandages (8) from all contact points (wherever they touch each other) and supported by screw connections (7) that altogether provide additional durability and strength.

Water and moisture resistant Plywood interior covering (5) provides durability and supports the frame while being lightweight insulation layer (6) consisting of siliconized glass wool plate, which provides high heat-sound-humidity insulation between aluminum composite panels that are used in the outer covering (2,3) and interior plywood coverings (5) - Screws(7) and Acyrlic Double-Sided Adhesive Bandages (8) allow mounting aluminum composite panels (2, 3) to the T- Slot Aluminum Profile Frame Structure (1) and create high level insulation.

In one embodiment of the invention, the characteristics of the T- Slot profiles used in the chassis and main frame (4,1) are preferably;
- 45 mm × 135 mm, moment of inertia L_{y} 330,6 cm⁴ and moment of resistance W_{y} 49 cm³
- 45 mm × 90 mm, moment of inertia L_{y} 121.4 cm⁴ and moment of resistance W_{y} 27 cm³
- 45x45 mm moment of inertia L_{y} 15,4 cm⁴ and moment of resistance W_{y} 6,84 cm³

In one embodiment of the invention, the chassis (4), is preferably manufactured by various sizes of T-slot aluminum profiles, depending on different loads on different points.

In one embodiment of the invention, U-shaped aluminum composite top panel (2) including front, roof and rear panels; preferably has 4,8 kg/mm² tensile strength, 122 Mpa bending strength, 0,240 kN rn²/m (4mm) stiffness, and 4 mm thickness.

In one embodiment of the invention, U-shaped aluminum composite top panel (2) including front, roof, rear, and side panels(3); includes polyurethane filling between two thin aluminum layers which provide strength and high level heat insulation, UV resistance and durability against external conditions.

In one embodiment of the invention, the insulation layer -(6) materials are preferably given as follows: In panel (2,3) heat transfer coefficient (Wm²/K) 5,54 , intermediary filler material 30 mm, the average of thermal conductivity measurements for internal siliconized glass wool coating is 0.035 Wm²/K at 10°C. The insulation layer - which provides maximum heat and sound insulation (6) consisting of siliconized glass wool filling plates with a thickness of 30 mm; are in the 30 mm gap between plywood interior covering (5) and the panel (2, 3). Total U Value of the wall is 0.934 Wm²/K.

In one embodiment of the invention, Interior plywood covering (5), preferably consists of, birch plywood / okume marin plywood materials with a thickness of 6 or 8 mm; that provide strenght, lightness, thermal insulation, water and moisture resistance.

In one embodiment of the invention, bottom side of the chassis (4), is preferably covered by a composite panel that provides maximum strength and insulation, 50 mm thick glass wool filling and okume marin plywood.

In one embodiment of the invention, the Caravan (C), preferably includes a diesel fuelled heating system.

In one embodiment of the invention, the Caravan's (C), total weight is preferably 700-750 kg.

In one embodiment of the invention, the Caravan's (C) height is preferably 230-235 cm, width is preferably 190 cm, the length of the living room is preferably 310 cm, body length of the Caravan (C) including the front box is preferably 355 cm, total Caravan (C) lenght is 475 cm.

In one embodiment of the invention, the Caravan's (C) height from the ground is preferably 40-45 cm, the lenght of tail section is preferably 61 cm from the end of the rear tire to the end of the Caravan (C) and 70-75 cm higher than the ground level.

In one embodiment of the invention, the Caravan's (C), internal dimensions are preferably 180 cm wide and 180 cm high which allow an average person to stand up and lay down horizontally in the Caravan (C).

In one embodiment of the invention, the Caravan (C) can easily be pulled without stumbling to the rocks, deep potholes or bumps on the rough terrain, thanks to tail angle of 21 degrees (divergence angle).

In one embodiment of the invention, The Caravan (C) has low wind resistance due to the nose average angle which is 52 degrees from the ground level to the highest point of the roof..

In one embodiment of the invention, the Caravan (C), can easly be towed preferably by a B-Class vehicle or a SUV.

In one embodiment of the invention, the Caravan (C), preferably meets all the personal needs of the users includes those: Kitchen section consisting of a sink, a gas cooker, a mini-fridge and a built in heating system; a portable toilet, shower, sitting group and dining table; gas cylinder for the cooker; the fuel tank to provide internal heating for winter use; portable sunshade on the right side of the Caravan to ensure the external use of table; custom design furniture with a "foldable to the wall" Sofa-Bed Mechanism (a bed which can tansform into a seating group); to provide internal and external lightining, invisible led in many locations or visible touch led lighting in the inner section, waterproof and shock-resistant multi-LED lighting at the outer section; fresh water tank, waste water tank and a mini booster pump.

In one embodiment of the invention, the Caravan (C), preferably for the hunters, fisherman and/or skiers, surfers offers a large luggage compartment in the front side that enables to transport the eqipment. In this special storage area there is a copartment for carrying hunting dogs, there are also lockers for rifles and ammunition, hunting supplies, fishing rods and/or skiing, surfing equipments.

In one embodiment of the invention, the Caravan (C), preferably has a side sunshade, bicycle transportation apparatus in the front section, aluminum connecting bars on the ceiling for roof racks, spare wheel and other options.

In one embodiment of the invention; any colored camouflage, color, image, a pattern, or PVC foil can be applied to the external surface of the Caravan's (C), in accordance with wishes, needs or sports that users are interested in.

In one embodiment of the invention, preferably advertisement-notice can be applied on the Caravan (C)

## Claims

1. Lightweight Caravan (C) made of T- Slot Aluminum Profile, comprising
- **Main Frame made from T-Slot Aluminum Profile connected with screws (1) and the chassis (4),** that provides easy installation, removal and attachment feature, light weight, high elasticity, endurance against external impacts,
- Concave and U-shaped Aluminum composite top panel (2) covering the frame structure (1) from front, roof and rear like a case along with Aluminum Composite Side Panels (3) which cover sides,
- All aluminum panels (2,3) and T-slot Aluminum Profiles pasted to each other with Acyrlic Double-Sided Adhesive Bandages (8) from all contact points and supported by screw connections (7) that altogether support additional durability and strength,
- **Plywood interior covering (5)** that is lightweight yet providing additional durability to the water and moisture,
- **Insulation layer (6)** consisting of siliconized glass wool plate, which provides high heat-sound-humidity insulation between aluminum composite panels (2,3) that are used in the outer covering and interior plywood coverings (5),
- **Screws (7)** and Acyrlic Double-Sided Adhesive Bandages (8) allowing mounting aluminum composite panels (2, 3) to the T-Slot Aluminum Profile Main Frame Structure (1) and create high level insulation.

2. A lightweight Caravan (C) made of T- Slot Aluminum Profile according to Claim 1, **characterized in that** the T- Slot profiles used in the chassis and main frame (4,1) are preferably;
• 45 mm×135 mm, moment of inertia L_{y} 330,6 cm⁴ and moment of resistance W_{y} 49 cm³
• 45 mm× 90 mm, moment of inertia L_{y} 121.4 cm⁴ and moment of resistance W_{y} 27 cm³
• 45x45 mm moment of inertia L_{y} 15,4 cm⁴ and moment of resistance W_{y} 6,84 cm³

3. A lightweight Caravan (C) made of T- Slot Aluminum Profile according to Claim 1, **characterized in that** the T-slot aluminum profiles used in the Caravan (C) are in various sizes.

4. A lightweight Caravan (C) made of T- Slot Aluminum Profile according to Claim 1, **characterized in that** the U-shaped aluminum composite top panel (2) including front, roof and rear panels; preferably has 4.8 kg/mm² tensile strength, 122 MPa bending strength, 0.240 kNrn²/m (4mm) stiffness and 4 mm thickness.

5. A lightweight Caravan (C) made of T- Slot Aluminum Profile according to Claim 1, **characterized in that** the U-shaped aluminum composite top panel (2) including front, roof, rear, and side panels (3); includes polyurethane filling between two thin aluminum layers which provide strength and high level heat insulation, UV resistance and durability against external conditions.

6. A lightweight Caravan (C) made of T- Slot Aluminum Profile according to Claim 1, **characterized in that** the insulation layer (6) materials are preferably given as follows: In panel (2,3) heat transfer coefficient (Wm²/K) 5,54 , intermediary filler material 3 cm, the average of thermal conductivity measurements for internal siliconized glass wool coating is 0.035 Wm²/K at 10°C; The insulation layer - which provides maximum heat and sound insulation (6) consisting of siliconized glass wool filling plates with a thickness of 30 mm; are in the 30 mm gap between plywood interior covering (5) and the panel (2, 3) and the Total U Value of the wall is 0.934 Wm²/K.

7. A lightweight Caravan (C) made of T- Slot Aluminum Profile according to Claim 1, **characterized in that** the interior plywood covering (5), preferably consists of, birch plywood / okume marin plywood materials with a thickness of 6 or 8 mm; that provides strenght, lightness, thermal insulation, also water and moisture resistance.

8. A lightweight Caravan (C) according to Claim 1, **characterized by** bottom of the chassis (4), which is preferably covered by a composite panel that provides maximum strength and insulation, 50 mm thick glass wool filling and okume marin plywood.

9. A lightweight Caravan (C) according Claim 1, characterizaed by preferably inclusion of a diesel fuelled heating system in the Caravan (C).

10. A lightweight Caravan (C) according to Claim 1, **characterized by** it's total weight which is preferably 700-750 kg.

11. A lightweight Caravan (C) according to claim 1, **characterized by** its dimensions as given accordingly: The Caravan (C) preferably has 230-235 cm hight, 190 cm width, 310 cm length, body length of the Caravan (C) including the front box is preferably 355 cm, and the total lenght is preferably 475 cm.

12. A lightweight Caravan (C) according to claim 1, **characterized by** the Caravan's (C) height from the ground which is preferably 40-45 cm, the lenght of tail section is preferably 61 cm from the end of the rear tire to the end of the Caravan (C) and 70-75 cm higher than the ground level.

13. A lightweight Caravan (C) according to claim 1, **characterized by** the Caravan's (C), internal dimensions preferably with 180 cm and hight of 180 cm which allow an average person to stand up and lay down horizontally in the Caravan (C).

14. A lightweight Caravan (C) according to claim 1, **characterized by** it's tail angle through which the Caravan (C) can be easily pulled without stumbling to the rocks, deep **potholes** or bumps on the **rough terrain,** thanks to tail angle of 21 degrees named divergence angle.

15. A lightweight Caravan (C) according to claim 1, **characterized by** it's nose angle through which the Caravan (C) has low wind resistance due to the nose average angle which is 52 degrees from the ground level to the highest point of the roof.

## Patentansprüche

1. Leichtgewichtiger Wohnwagen (C) gefertigt aus T-Nut-Aluminiumprofil, umfassend
- **den Hauptrahmen gefertigt aus dem mit den Schrauben (1) und dem Chassis (4) verbundenen T-Nut-Aluminiumprofil,** der eine einfache Installation-, Entfernung- und Anbringungsmerkmal vorsieht und leicht ist und eine hohe Elastizität aufweist und gegen Außenwirkungen beständig ist,
- die konkave und U-förmige Aluminiumverbund-Deckplatte (2), die gemeinsam mit den die Seiten bedeckende Aluminiumverbund-Seitenplatten (3) die Rahmenstruktur (1) von vorne, vom Dach und von hinten wie ein Gehäuse bedeckt,
- alle Aluminiumplatten (2, 3) und T-Nut-Aluminiumprofile, die durch die Acryl-Doppelklebeverbände (8) von allen Kontaktstellen aneinander geklebt werden und von den insgesamt die zusätzliche Haltbarkeit und die Festigkeit unterstützenden Schraubverbindungen (7) unterstützt werden,
- **die innere Sperrholzverkleidung (5),** die zwar leicht ist, aber die zusätzliche Haltbarkeit gegen Wasser und Feuchtigkeit vorsieht,
- **die Isolationsschicht (6)** aus der silikonisierten Glaswolleplatte, die zwischen den bei der Außenverkleidung und inneren Sperrholzverkleidungen (5) verwendeten Aluminiumverbundplatten (2, 3) hohe Wärme-, Schall-, und Feuchtigkeitsdämmung vorsieht,
- **die Schrauben (7)** und Acryl-Doppelklebeverbände (8), die eine Montage der Aluminiumverbundplatten (2, 3) an die T-Nut-Aluminiumprofil-Hauptrahmenstruktur (1) ermöglichen und hohe Isolierung vorsehen,

2. Leichtgewichtiger Wohnwagen (C) gefertigt aus T-Nut-Aluminiumprofil nach Anspruch 1, **dadurch gekennzeichnet, dass** die im Chassis und Hauptrahmen (4, 1) verwendeten T-Nut-Aluminiumprofile vorzugsweise wie folgt sind;
• 45 mm × 135 mm, Trägheitsmoment L_{y} 330.6 cm⁴ und Widerstandsmoment W_{y} 49 cm³
• 45 mm × 90 mm, Trägheitsmoment L_{y} 121.4 cm⁴ und Widerstandsmoment W_{y} 27 cm³
• 45 mm × 45 mm, Trägheitsmoment L_{y} 15.4 cm⁴ und Widerstandsmoment W_{y} 6.84 cm³

3. Leichtgewichtiger Wohnwagen (C) gefertigt aus T-Nut-Aluminiumprofil nach Anspruch 1, **dadurch gekennzeichnet, dass** die im Wohnwagen (C) verwendeten T-Nut-Aluminiumprofile in verschiedenen Größen vorhanden sind.

4. Leichtgewichtiger Wohnwagen (C) gefertigt aus T-Nut-Aluminiumprofil nach Anspruch 1, **dadurch gekennzeichnet, dass** die die Front-, Dach- und Rückplatten umfassende U-förmige Aluminiumverbund-Deckplatte (2) vorzugsweise eine Zugfestigkeit von 4.8 kg/mm², eine Biegefestigkeit von 122 MPa, eine Steifigkeit von 0.240 kNrn²/m (4mm) und eine Dicke von 4 mm aufweist.

5. Leichtgewichtiger Wohnwagen (C) gefertigt aus T-Nut-Aluminiumprofil nach Anspruch 1, **dadurch gekennzeichnet, dass** die die Front-, Dach- Rück- und Seitenplatten (3) umfassende U-förmige Aluminiumverbund-Deckplatte (2) die Polyurethan-Füllung zwischen den zwei dünnen Aluminiumschichten umfasst, die die Festigkeit und hohe Wärmedämmung, UV-Beständigkeit und Festigkeit gegen äußeren Bedingungen vorsehen.

6. Leichtgewichtiger Wohnwagen (C) gefertigt aus T-Nut-Aluminiumprofil nach Anspruch 1, **dadurch gekennzeichnet, dass** die Materialien von Isolationsschicht (6) vorzugsweise wie folgt sind: Der Wärmedurchgangskoeffizient (Wm²/K) in der Platte (2, 3) ist 5,54, das mittlere Füllmaterial ist 3 cm, der Durchschnittswert von Wärmeleitfähigkeitsmessungen für die innere silikonisierte Glaswolle-Beschichtung bei 10°C ist 0.035 Wm²/K; die Isolationsschicht (6), die die maximale Wärme- und Schalldämmung vorsieht und aus den silikonisierten Glaswolle-Füllplatten mit Dicke von 30 mm besteht, befindet sich im Spalt von 30 mm zwischen der inneren Sperrholzverkleidung (5) und der Platte (2, 3) und der gesamte U-Wert von Wand ist 0.934 Wm²/K.

7. Leichtgewichtiger Wohnwagen (C) gefertigt aus T-Nut-Aluminiumprofil nach Anspruch 1, **dadurch gekennzeichnet, dass** die innere Sperrholzverkleidung (5) vorzugsweise aus den Birkensperrholz/Okume-Marinesperrholz-Materialien besteht, die eine Dicke von 6 oder 8 mm aufweisen und die Festigkeit, Leichtigkeit, Wärmedämmung, auch die Festigkeit gegen Wasser und Feuchtigkeit vorsehen.

8. Leichtgewichtiger Wohnwagen (C) nach Anspruch 1, **dadurch gekennzeichnet, dass** der Boden von Chassis (4), der von einer Verbundplatte bedeckt werden, die vorzugsweise maximale Festigkeit und Isolierung, eine Glaswolle-Füllung mit Dicke von 50 mm und Okume-Marinesperrholz vorsieht.

9. Leichtgewichtiger Wohnwagen (C) nach Anspruch 1, **dadurch gekennzeichnet, dass** vorzugsweise das Diesel-Heizsystem in den Wohnwagen (C) eingefügt wird.

10. Leichtgewichtiger Wohnwagen (C) nach Anspruch 1, **dadurch gekennzeichnet, dass** sein Gesamtgewicht 700-750 kg beträgt.

11. Leichtgewichtiger Wohnwagen (C) nach Anspruch 1, **dadurch gekennzeichnet, dass** seine Dimensionen wie folgt sind: Der Wohnwagen (C) hat vorzugsweise eine Höhe von 230-235 cm, eine Breite von 190 cm, eine Länge von 310 cm, die Körperlänge von Wohnwagen (C) einschließlich der Frontbox ist vorzugsweise 355 cm und die Gesamtlänge ist vorzugsweise 475 cm.

12. Leichtgewichtiger Wohnwagen (C) nach Anspruch 1, **dadurch gekennzeichnet, dass** die Höhe vom Boden des Wohnwagens (C) vorzugsweise 40-45 cm beträgt, die Länge von Heckteil vorzugsweise vom Ende des Hinterreifens bis zum Ende des Wohnwagens (C) 61 cm beträgt und 70-75 cm höher ist als das Bodenniveau.

13. Leichtgewichtiger Wohnwagen (C) nach Anspruch 1, **dadurch gekennzeichnet, dass** die Innenabmessungen des Wohnwagens (C) vorzugsweise eine Breite von 180 cm und eine Höhe von 180 cm umfassen, sodass das Aufstehen und das horizontale Hinlegen eines Durchschnittsmenschen im Wohnwagen (C) ermöglicht werden.

14. Leichtgewichtiger Wohnwagen (C) nach Anspruch 1, **dadurch gekennzeichnet, dass** sein Heck-Winkel, der einfaches Ziehen von Wohnwagen (C) ohne Stolpern zu den Steinen, **Schlaglöchern** oder den Unebenheiten **im unwegsamen Gelände** dank des Heck-Winkels von 21 Grad, der auch als Divergenzwinkel genannt wird, ermöglicht.

15. Leichtgewichtiger Wohnwagen (C) nach Anspruch 1, **dadurch gekennzeichnet, dass** sein Nasenwinkel, der ermöglicht, dass der Wohnwagen (C) einen geringen Windwiderstand aufgrund des durchschnittlichen Nasenwinkels, der vom Bodenniveau bis zum höchsten Punkt des Dachs 52 Grad ist, aufweist.

## Revendications

1. Caravane Légère (C) faite de profilé en Aluminium à Rainures en T, comprenant
- **Cadre Principal fait de Profilé en Aluminium à Rainures en T connecté avec des vis (1) et le châssis (4),** qui permet une installation, un retrait et une fixation faciles, un poids léger, une grande élasticité, une résistance aux chocs extérieurs,
- Panneau supérieur (2) concave et en forme de U en composite en Aluminium couvrant la structure du cadre (1) à l'avant, au toit et à l'arrière comme une caisse avec des Panneaux Latéraux (3) en Composite en Aluminium qui couvrent les côtés,
- Tous les panneaux en aluminium (2, 3) et les Profilés en Aluminium à Rainures en T sont collés les uns aux autres avec des bandes adhésives double face en acrylique (8) sur tous les points de contact et soutenus par des connexions à vis (7) qui, ensemble, soutiennent une durabilité et une résistance supplémentaires,
- **Revêtement intérieur en contreplaqué (5)** qui est léger tout en offrant une durabilité supplémentaire à l'eau et à l'humidité,
- **Couche d'isolation (6)** constituée d'une plaque en laine de verre siliconée, qui assure une isolation thermique-acoustique-hygrométrique élevée entre les panneaux composites en aluminium (2, 3) qui sont utilisés dans le revêtement extérieur et les revêtements intérieurs en contreplaqué (5),
- **Vis (7)** et Bandes Adhésives Double Face en Acrylique (8) permettant de monter les panneaux composites en aluminium (2, 3) sur la Structure du Cadre Principal en Profilé en Aluminium à Rainures en T (1) et de créer un haut niveau d'isolation.

2. Caravane Légère (C) faite de profilé en Aluminium à Rainures en T selon la revendication 1, **caractérisée en ce que** les profilés à Rainures en T utilisés dans le châssis et le cadre principal (4, 1) sont de préférence ;
• 45 mm × 135 mm, moment d'inertie L_{y} 330.6 cm⁴ et moment de résistance W_{y} 49 cm³
• 45 mm × 90 mm, moment d'inertie L_{y} 121.4 cm⁴ et moment de résistance W_{y} 27 cm³
• 45 × 45 mm, moment d'inertie L_{y} 15.4 cm⁴ et moment de résistance W_{y} 6.84 cm³

3. Caravane Légère (C) faite de profilé en Aluminium à Rainures en T selon la revendication 1, **caractérisée en ce que** les profilés en aluminium à Rainures en T utilisés dans la Caravane (C) sont de différentes tailles.

4. Caravane Légère (C) faite de profilé en Aluminium à Rainures en T selon la revendication 1, **caractérisée en ce que** le panneau supérieur (2) en composite en aluminium en forme de U, comprenant les panneaux avant, de toit et arrière a de préférence une résistance à la traction de 4.8 kg/mm², une résistance à la flexion de 122 MPa, une rigidité de 0.240 kNrn²/m (4 mm) et une épaisseur de 4 mm.

5. Caravane Légère (C) faite de profilé en Aluminium à Rainures en T selon la revendication 1, **caractérisée en ce que** le panneau supérieur (2) en composite en aluminium en forme de U, comprenant les panneaux avant, de toit, arrière et latéraux (3), comprend un remplissage en polyuréthane entre deux fines couches en aluminium qui assurent la résistance et un niveau élevé d'isolation thermique, de résistance aux UV et de durabilité contre les conditions extérieures.

6. Caravane Légère (C) faite de profilé en Aluminium à Rainures en T selon la revendication 1, **caractérisée en ce que** les matériaux de la couche d'isolation (6) sont de préférence donnés comme suit : Dans le panneau (2, 3) le coefficient de transfert thermique (Wm²/K) est de 5,54, le matériau de remplissage intermédiaire est de 3 cm, la moyenne des mesures de conductivité thermique pour le revêtement interne en laine de verre siliconée est de 0.035 Wm²/K à 10°C ; La couche d'isolation - qui fournit une isolation thermique et acoustique maximale (6) est constituée de plaques de remplissage en laine de verre siliconée d'une épaisseur de 30 mm est trouve dans l'espace de 30 mm entre le revêtement intérieur en contreplaqué (5) et le panneau (2, 3) et la Valeur U Totale du mur est de 0.934 Wm²/K.

7. Caravane Légère (C) faite de profilé en Aluminium à Rainures en T selon la revendication 1, **caractérisée en ce que** le revêtement intérieur en contreplaqué (5) est de préférence constitué de contreplaqué de bouleau / contreplaqué marin d'okoumé d'une épaisseur de 6 ou 8 mm, qui assure la résistance, la légèreté, l'isolation thermique, ainsi que la résistance à l'eau et à l'humidité.

8. Caravane Légère (C) selon la revendication 1, **caractérisée en ce que** le fond du châssis (4), qui est de préférence couvert par un panneau composite qui assure une résistance et une isolation maximales, un remplissage en laine de verre de 50 mm d'épaisseur et un contreplaqué marin d'okoumé.

9. Caravane Légère (C) selon la revendication 1, **caractérisée par** de préférence, l'installation d'un système de chauffage au diesel dans la Caravane (C).

10. Caravane Légère (C) selon la revendication 1, **caractérisée en ce que** son poids total est de préférence de 700-750 kg.

11. Caravane Légère (C) selon la revendication 1, **caractérisée en ce que** ses dimensions sont indiquées en conséquence : La Caravane (C) a de préférence une hauteur de 230-235 cm, une largeur de 190 cm, une longueur de 310 cm, la longueur du corps de la Caravane (C), y compris la caisse avant, est de préférence de 355 cm, et la longueur totale est de préférence de 475 cm.

12. Caravane Légère (C) selon la revendication 1, **caractérisée en ce que** la hauteur de la Caravane (C) depuis le sol est de préférence de 40-45 cm, la longueur de la section arrière est de préférence de 61 cm depuis l'extrémité du pneu arrière jusqu'à l'extrémité de la Caravane (C) et de 70-75 cm plus haut que le niveau du sol.

13. Caravane Légère (C) selon la revendication 1, **caractérisée en ce que** les dimensions intérieures de la Caravane (C) sont de préférence de 180 cm de largeur et de 180 cm de hauteur, de manière à permettre à une personne moyenne de se tenir debout et de s'allonger horizontalement dans la Caravane (C).

14. Caravane Légère (C) selon la revendication 1, **caractérisée en ce que** son angle d'inclinaison, également appelé angle de divergence, par lequel la Caravane (C) peut être facilement tirée sans trébucher sur les rochers, les **nids-de-poule** profonds ou les bosses sur le **terrain accidenté** est de 21 degrés.

15. Caravane Légère (C) selon la revendication 1, **caractérisée en ce que** son angle de nez par lequel la caravane (C) présente une faible résistance au vent en raison de l'angle moyen de nez est de 52 degrés depuis le niveau du sol jusqu'au point le plus élevé du toit.
